# EUROPEAN PATENT SPECIFICATION

(11) **EP 0 410 404 B1**
(45) Date of publication and mention of the grant of the patent: **06.10.1993**
(21) Application number: 90114222.4
(22) Date of filing: 25.07.1990
(51) Int. Cl.: G01N 21/47, G01N 21/55

(54) **Improvements to electroreflectance spectroscopy systems**
Spektroskopiesysteme bei der Elektroreflexionsmessung
Systèmes spectroscopiques par électroréflectance

(30) Priority: 26.07.1989 IT 6763089
(43) Date of publication of application: 30.01.1991
(73) Proprietor: CSELT Centro Studi e Laboratori Telecomunicazioni S.p.A., I-10148 Turin (IT)
(72) Inventor: Alibert,Claude, F-34980 Saint Gely du Fex (FR)
(74) Representative: Riederer Freiherr von Paar zu Schönau, Anton

(56) References cited:
- US-A- 3 850 508

## Description

The present invention refers to material characterization systems, and more particularly to improvements to electroreflectance spectroscopy systems.

Electroreflectance technique is widely used in semiconductor material analysis and characterization and consists in applying an electric field to the surface of a sample under test, modulating the electric field and determining the relative variations in the reflectance of the surface induced by field modulation. In this way information can be obtained on optical transitions in the material, which provides further information on the material composition, on the structure of a body made of that material, etc..

Presently, to perform measurements by this technique, the modulated electric field is applied to the sample through a transparent Schottky barrier, or a MOS or PIN diode structure, obtained on a certain zone of the sample surface, which region is then scanned by a light beam which is reflected by the surface towards a detector connected to a measurement and data processing system. As an alternative, an electrolyte can be applied on such a zone. An example of an apparatus operating in this way is depicted in the paper "Modulation Spectroscopy as a Tool for Electronic Material Characterization" by N. Bottka, D. K. Gaskill, R. S. Sillmon, R. Henry and R. Glosser, Journal of Electronic Materials, Vol. 17, No. 2, 1988, pages 162 ff.

Said known apparatus presents a twofold disadvantage:
- the sample surface needs to be prepared, which lengthens the operation time and increases measurement costs;
- the zone involved in the measurement is rather wide, what entails a limited resolution in the measurement performed and limits flexibility of use of the apparatus, which can be used only with samples of relatively big size.

The present invention provides a method which does not require any preparation of the sample surface and allows the analysis of samples even of very small size.

The invention provides a method in which a variable electric field applied to the surface of a sample of the material causes a variation in the surface reflectance and is applied by a point-like electrode placed close to or in contact with the sample surface.

The invention concerns also an apparatus for implementing such a method, comprising a source of a variable electric voltage, a source of a monochromatic radiation sending such radiation onto the surface of a sample, a detector collecting the radiation reflected by said surface and measuring means determining the relative variations of the surface reflectance induced by the variable electric field, wherein said variable electric voltage source is connected with a point-like electrode which is the source of the electric field, placed close to or in contact with such a surface at the incidence point of the light radiation.

An example of an apparatus according to the invention is schematically represented in the annexed drawing.

A sample 1 of the material under test is illuminated by a monochromatic light beam emitted by a source 2, and reflects such a radiation towards a photodetector 3 connected to a suitable measurement and data processing equipment 4 (e.g. a lock-in amplifier and a processor associated with a display).

In correspondence with the incidence point of the light a point-like electrode 5 is provided, which is connected to a source 6 of a modulated electric voltage (more particularly a cascade of a d.c. and an a.c. voltage generator), is placed close to or in contact with the sample surface and causes the required reflectance variation.

For instance the distance is not greater than about 1nm.

If required by the measurement to be performed, means can be provided to displace electrode 5 (and hence also the point of incidence of the light beam) with respect to sample 1, so as to scan the sample itself.

By operating according to the invention a preparation of the sample surface is no longer required. Besides, by a suitable machining of the point-like electrode, the area involved in the reflectance variation is extremely small, and hence accurate measurements can be performed also on miniaturized devices, possibly even by a surface scanning.

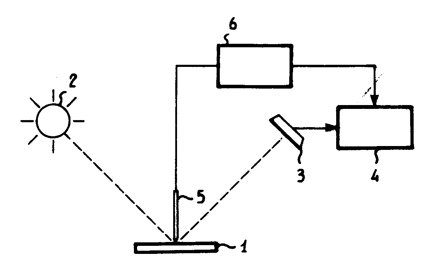

## Claims

1. A method of analyzing semiconductor materials by electroreflectance, wherein a variable electric field applied to the surface of a sample (1) of the material causes a variation of the reflectance of the surface itself, characterized in that said variable electric field is applied by a point-like electrode (5) placed close to or in contact with the surface of the sample (1).

2. A method as claimed in claim 1, characterized in that said point-like electrode (5) is displaceable with respect to the surface of the sample (1).

3. Apparatus for implementing the method as claimed in claim 1, comprising a source (2) of a monochromatic light radiation sending such a radiation on the surface of a sample (1), a detector (3) collecting the radiation reflected by said surface, a source (6) of a variable electric voltage, and measurement means (4) determining the relative variations of the surface reflectance induced by the variable electric field, characterized in that said source (6) of the variable electric voltage is connected to a point-like electrode (5) placed close to or in direct contact with the surface of the sample (1) at the incidence point of the light radiation.

4. Apparatus as claimed in claim 3, characterized in that it comprises means for changing the position of the point-like electrode (5) with respect to the sample (1) and the incidence point of the light radiation on the sample (1).

## Patentansprüche

1. Verfahren zum Analysieren von Halbleitermaterialien durch Elektroreflexion, wobei ein an die Oberfläche eines Probestücks (1) des Materials angelegtes variables elektrisches Feld eine Veränderung der Reflexion der Oberfläche selbst bewirkt, dadurch gekennzeichnet, daß man das variable elektrische Feld durch eine punktartige Elektrode (5) anlegt, die man nahe bei der Oberfläche oder in Kontakt mit der Oberfläche des Probestücks (1) anordnet.

2. Verfahren nach Anspruch 1, dadurch gekennzeichnet, daß die punktartige Elektrode (5) in Bezug zur Oberfläche des Probestücks (1) ortsveränderlich ist.

3. Vorrichtung zur Durchführung des Verfahrens nach Anspruch 1, mit einer Quelle (2) einer monochromatischen Lichtstrahlung, die sie auf die Oberfläche eines Probestücks (1) richtet, einem die von der Oberfläche reflektierte Strahlung aufnehmenden Detektor (3), einer Quelle (6) einer variablen elektrischen Spannung und einer Meßeinrichtung (4), die die vom variablen elektrischen Feld induzierten relativen Veränderungen der Oberflächenreflexion bestimmt, dadurch gekennzeichnet, daß die Quelle (6) des variablen elektrischen Felds mit einer punktartigen Elektrode (5) verbunden ist, die in der Nähe der Oberfläche oder in direktem Kontakt mit der Oberfläche des Probestücks (1) am Einfallpunkt der Lichtstrahlung angeordnet ist.

4. Vorrichtung nach Anspruch 3, dadurch gekennzeichnet, daß sie eine Einrichtung zum Ändern der Position der punktartigen Elektrode (5) in Bezug zum Probestück (1) und des Einfallpunkts der Lichtstrahlung am Probestück (1) umfaßt.

## Revendications

1. Procédé d'analyse de matériaux semi-conducteurs par électroréflectance, où un champ électrique variable appliqué à la surface d'un échantillon (1) du matériau cause une variation de la réflectance de la surface, caractérisé en ce que le champ électrique variable est appliqué à l'aide d'une électrode à pointe (5) placée près de la surface de l'échantillon (1) ou en contact avec elle.

2. Procédé selon la revendication 1, caractérisé en ce que l'électrode à pointe (5) peut être déplacée par rapport à la surface de l'échantillon (1).

3. Appareillage pour la mise en oeuvre du procédé selon la revendication 1, comprenant une source (2) d'un rayonnement lumineux monochromatique qui envoie ce rayonnement sur la surface d'un échantillon (1), un détecteur (3) qui recueille le rayonnement réfléchi par cette surface, une source (6) d'une tension électrique variable, et des moyens de mesure (4) qui déterminent les variations relatives de la réflectance de la surface induites par le champ électrique variable, caractérisé en ce que la source (6) de la tension électrique variable est connectée à uneélectrode à pointe (5) placée près de la surface de l'échantillon (1) ou en contact directe avec celle-ci au point d'incidence du rayonnement lumineux.

4. Appareillage selon la revendication 3, caractérisé en ce qu'il comprend des moyens pour changer la position de l'électrode à pointe (5) par rapport à l'échantillon (1), ainsi que le point d'incidence du rayonnement lumineux sur l'échantillon (1).
